# EUROPEAN PATENT APPLICATION

(11) **EP 4 582 932 A1**
(43) Date of publication of application: **09.07.2025**
(21) Application number: 23860814.5
(22) Date of filing: 28.08.2023
(51) Int. Cl.: G06F 8/65, G06F 8/61, G06F 8/71, G06F 9/30, G06F 21/62, G06F 21/60

(54) **BATTERY PACK AND METHOD FOR UPDATING FIRMWARE THEREOF**

(30) Priority: 29.08.2022 KR 20220108710; 24.08.2023 KR 20230111386
(71) Applicant: LG Energy Solution, Ltd., Seoul 07335 (KR)
(72) Inventor: LEE, Ye Seul, Daejeon 34122 (KR); YANG, Seong Yeol, Daejeon 34122 (KR)
(74) Representative: Goddar, Heinz J.
(86) International application number: PCT/KR2023/012719
(87) International publication number: WO 2024/049138

(57) **Abstract**

A method of updating firmware of a battery pack according to the present disclosure includes transmitting battery data indicating a state of a battery cell included in the battery pack to a server, receiving an update mode entry request for firmware update from the server, receiving encrypted battery data, which is data obtained by encrypting the battery data, from the server, decrypting the encrypted battery data, comparing the decrypted battery data with the battery data stored in the battery pack, and updating firmware stored in the battery pack by using firmware received from the server, when the decrypted battery data is the same as the battery data stored in the battery pack.

## Description

### [TECHNICAL FIELD]

### CROSS-REFERENCE TO RELATED APPLICATION

This application claims priority to and the benefit of Korean Patent Application No. 10-2022-0108710 filed in the Korean Intellectual Property Office on August 29, 2022, and Korean Patent Application No. 10-2023-0111386 filed in the Korean Intellectual Property Office on August 24, 2023, the entire contents of which are incorporated herein by reference.

### TECHNICAL FIELD

Embodiments disclosed herein relate to a battery pack including a battery that stores power, and a method of updating firmware of the battery pack.

### [BACKGROUND ART]

Recently, research and development of secondary batteries have been actively performed. Secondary batteries, which are chargeable/dischargeable batteries, may include all of conventional nickel (Ni)/cadmium (Cd) batteries, Ni/metal hydride (MH) batteries, etc., and recent lithium-ion batteries. A lithium-ion battery has a much higher energy density than those of the conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

A device using a battery as a power source may have mounted thereon a battery that stores power and a battery management system (BMS) controlling an operation of the battery. The BMS may be implemented with a combination of software and hardware, and the hardware may operate with the software for driving and controlling the hardware. In particular, when the software is arbitrarily modified by a malicious attacker with respect to directly controlling an operation of the BMS, a serious accident such as fire/explosion may occur due to an abnormal operation of the BMS.

### [DISCLOSURE]

### [TECHNICAL PROBLEM]

Embodiments disclosed herein aim to provide a battery pack capable of preventing malfunction from occurring due to a malicious attack, and a method of updating firmware of the battery pack.

Technical problems of the embodiments disclosed herein are not limited to the above-described technical problems, and other unmentioned technical problems would be clearly understood by one of ordinary skill in the art from the following description.

### [TECHNICAL SOLUTION]

A method of updating firmware of a battery pack according to an embodiment of the present disclosure includes transmitting battery data indicating a state of a battery cell included in the battery pack to a server, receiving an update mode entry request for firmware update from the server, receiving encrypted battery data, which is data obtained by encrypting the battery data, from the server, decrypting the encrypted battery data, comparing the decrypted battery data with the battery data stored in the battery pack, and updating firmware stored in the battery pack by using firmware received from the server, when the decrypted battery data being the same as the battery data stored in the battery pack.

A method of updating firmware of a battery pack, by a server according to an embodiment of the present disclosure includes receiving battery data indicating a state of a battery cell included in the battery pack from the battery pack, when firmware update for the battery pack being required, transmitting an update mode entry request for the firmware update to the battery pack, encrypting the battery data and transmitting the encrypted battery data to the battery pack, and transmitting firmware corresponding to the battery pack to the battery pack to update firmware stored in the battery pack.

A battery pack according to an embodiment of the present disclosure includes at least one battery module and a pack battery management system (BMS) configured to control the at least one battery module, in which the pack BMS includes a communication unit configured to transmit battery data indicating a state of a battery cell included in the battery pack to a server and receive an update mode entry request for firmware update and encrypted battery data, which is data obtained by encrypting the battery data, from the server, and a controller configured to compare decrypted battery data, which is generated by decrypting the encrypted battery data, with battery data stored in the pack BMS, and update firmware stored in the pack BMS by using firmware received from the server, when the decrypted battery data being the same as the battery data stored in the pack BMS.

### [ADVANTAGEOUS EFFECTS]

With a battery pack and a method of updating firmware thereof according to an embodiment disclosed herein, it is possible to guarantee a stable operation of the battery pack by preventing illegal updates from occurring due to malicious attackers.

Moreover, various effects recognized directly or indirectly from the disclosure may be provided.

### [DESCRIPTION OF DRAWINGS]

FIG. 1 is a block diagram of a battery pack and a server according to an embodiment disclosed herein.
FIG. 2 is a block diagram showing in detail a pack BMS shown in FIG. 1.
FIG. 3 is a flowchart showing a procedure for updating a BMS image according to an embodiment of the present disclosure.
FIG. 4 is a view schematically showing information used in the procedure for updating the BMS image of FIG. 3.
FIG. 5 is a flowchart showing a procedure for updating a BMS image according to another embodiment of the present disclosure.
FIG. 6 is a view schematically showing information used in the procedure for updating the BMS image of FIG. 5.
FIG. 7 is a block diagram showing a hardware configuration of a computing system for performing an operating method of a battery management system, according to an embodiment disclosed herein.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

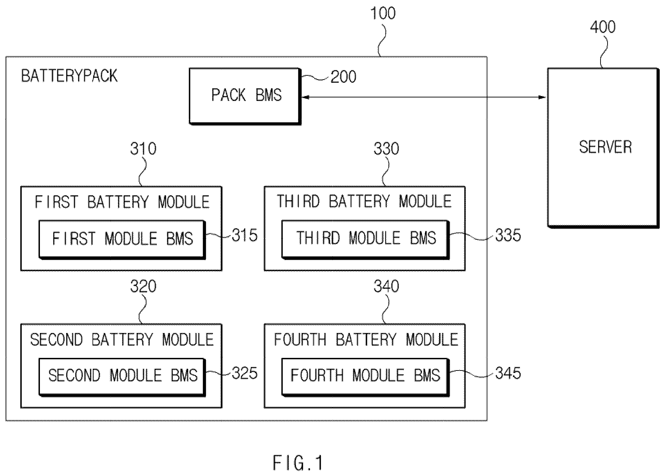

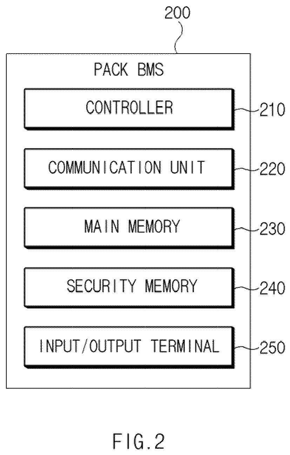

FIG. 1 is a block diagram of a battery pack and a server according to an embodiment disclosed herein. FIG. 2 is a block diagram showing in detail a pack BMS shown in FIG. 1.

Referring to FIGS. 1 and 2, a battery system according to an embodiment disclosed herein may include a battery pack 100 and a cloud server 400.

The battery pack 100 may be mounted on another device (e.g., an electric scooter, an electric vehicle, etc.) to supply a power source required for driving of a device. The battery pack 100 may include a pack battery management system (BMS) 200, a first battery module 310, a second battery module 320, a third battery module 330, and a fourth battery module 340. While it is shown in FIG. 1 that the battery pack 100 includes the four battery modules 310 to 340, this is merely an example and an arbitrary number of (e.g., 2, 10, etc.,) battery modules may be included in the battery pack 100.

The pack BMS 200 may control an overall operation of the battery pack 100 and communicate with the server 400. In FIG. 2, the pack BMS 200 may include a controller 210, a communication unit 220, a main memory 230, a security memory 240, and an input/output terminal 250.

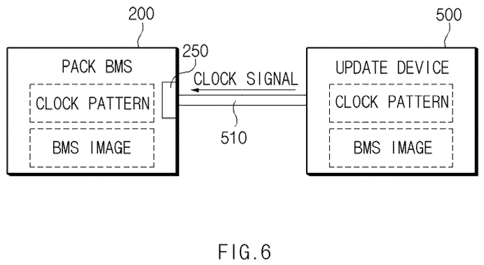

The controller 210 may control an overall operation of the pack BMS 200. According to an embodiment, the controller 210 may control the communication unit 220 to communicate with each of the first to fourth battery modules 310 to 340 and/or the server 400. According to an embodiment, the controller 210 may store data received from an outside and/or data processed or generated by the controller 210 in the main memory 230 and/or the security memory 240 or read the data stored in the main memory 230 and/or the security memory 240. The controller 210 may be electrically connected to a particular device (e.g., an update device of FIG. 6) connected through the input/output terminal 250 to control the pack BMS 200 to perform an operation required by the particular device.

Meanwhile, the controller 210 may process state data (e.g., voltage, current, resistance, temperature, etc., of a battery cell) received from each of the first to fourth battery modules 310 to 340 to generate the processed state data (e.g., a state of charge (SoC), a state of health (SoH), etc.). Herein, the received-state data and/or the processed-state data may be stored in the main memory 230 as battery data regarding a corresponding battery module of the first to fourth battery modules 310 to 340 under control of the controller 210. That is, the battery data may be information indicating a state of the corresponding battery module (or a corresponding battery cell).

The controller 210 may control components included in the battery pack 100 based on the BMS image stored in the main memory 230. According to an embodiment, the BMS image may be firmware for driving the battery pack 100. For example, the BMS image may have a form of binary data, without limiting the scope of the present disclosure thereto.

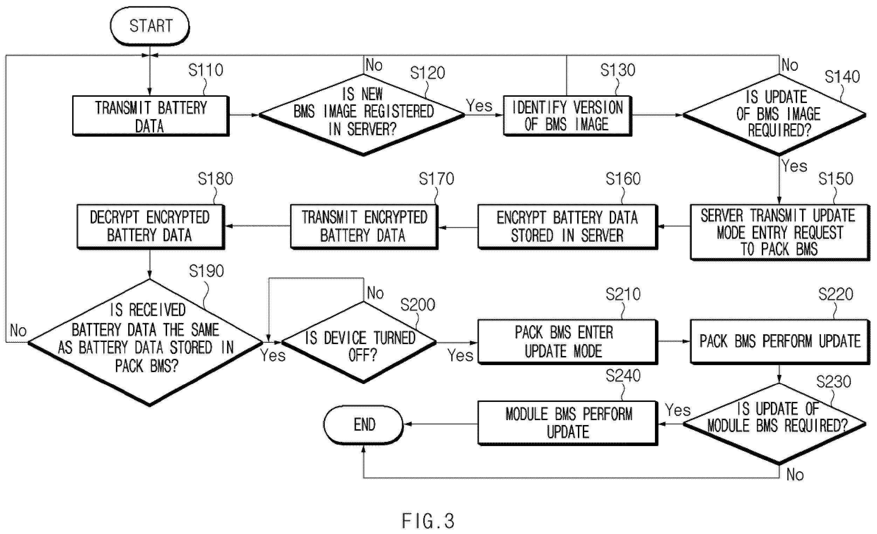

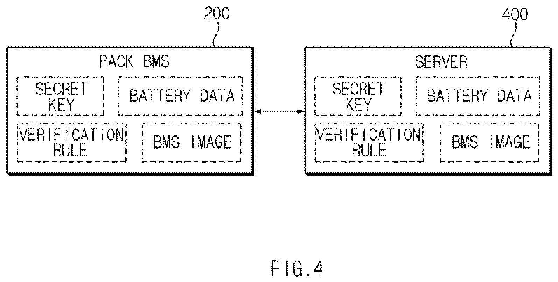

Moreover, the controller 210 may process a request received from the server 400, for example, decrypt encrypted battery data received from the server 400 and perform verification with respect to the server 400 by using the decoded battery data. A detailed operation related thereto will be described later with reference to FIGS. 3 and 4.

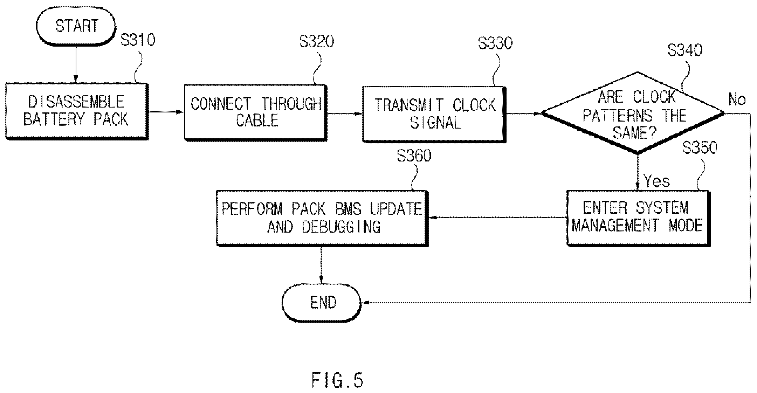

The controller 210 may analyze a clock signal received from a particular device (e.g., the update device of FIG. 6) connected through the input/output terminal 250 to perform verification with respect to the particular device. A detailed operation related thereto will be described later with reference to FIGS. 5 and 6.

The communication unit 220 may establish a wired communication channel and/or a wireless communication channel between the pack BMS 200 and the server 400 and/or the pack BMS 200 and a battery module (at least one of the battery modules 310 to 340), and transmit data to or receive data from the server 400 and/or the battery module (at least one of the battery modules 310 to 340) through the established communication channel. For example, the communication unit 220 may transmit data to and receive data from another device based on at least one radio access technology (RAT).

The main memory 230 may store instructions required for an operation of the battery pack 100 and/or information about the battery modules 310 to 340. According to an embodiment, the main memory 230 may store a BMS image. According to an embodiment, the main memory 230 may store battery data of each of the battery modules 310 to 340. Herein, the main memory 230 may include an allocation region for storing battery data of each of the battery modules 310 to 340, and the main memory 230 may sequentially store battery data received and generated for a corresponding battery module in a corresponding allocation region. When the battery data is received over a storage capacity of a corresponding allocation region, the main memory 230 may delete battery data stored first among battery data stored in the corresponding allocation region and store currently received battery data. That is, the main memory 230 may store the latest battery data corresponding to the storage capacity of the corresponding allocation region.

The security memory 240 may store a secret key. Herein, the secret key may be an encryption/decryption key used for verification with respect to the server 400, and may be a symmetric key previously shared between the server 400 and the battery pack 100. That is, a secret key stored in the security memory 240 and a secret key stored in the server 400 may be the same as each other. According to an embodiment, the secret key previously shared between the server 400 and the battery pack 100 may be updated according to a certain period (e.g., 1 day) or a certain condition (e.g., at the time of updating a BMS image).

In the present disclosure, a description will be made assuming that encryption/decryption with respect to battery data is performed according to a symmetric key algorithm, but the scope of the present disclosure is not limited thereto and encryption/decryption may be performed on battery data according to an asymmetric key algorithm.

Each of the main memory 230 and the security memory 240 may be implemented with non-volatile memory, volatile memory, or a combination thereof.

The input/output terminal 250 may be a separately provided terminal for electrical connection and/or communication with a particular device (e.g., the update device of FIG. 6). According to an embodiment, the input/output terminal 250 may be a Joint Test Action Group (JTAG) connector supporting a scheme to transmit and receive data in a serial communication manner for digital input/output. The controller 210 may update a BMS image due to data received through the input/output terminal 250.

A procedure for updating a BMS image through the input/output terminal 250 will be described later with reference to FIGS. 5 and 6.

Referring back to FIG. 1, the first to fourth battery modules 310 to 340 may respectively have the same or corresponding structures and operations. While the following description will be made mainly of the first battery module 310, this description may also be applied to the second to fourth battery modules 320 to 340.

The first battery module 310 may include a first module BMS 315 for controlling an overall operation of the first battery module 310. Although not shown in FIG. 1, the first battery module 310 may include at least one battery cell for storing (charging) power and emitting (discharging) power. According to an embodiment, the first battery module 310 may include at least one sensor capable of obtaining information about a state of at least one battery cell. For example, the at least one sensor may obtain information about voltage, current, resistance, and/or temperature of a battery cell and transmit the information to the first module BMS 315.

The first module BMS 315 may generate state data including the information obtained from the at least one sensor and/or information generated by processing the obtained information. The state data may be data related to the state of the battery cell of the first battery module 310.

The first module BMS 315 may communicate with the pack BMS 200 to transmit and receive data. According to an embodiment, the first module BMS 315 may transmit the state data of the first battery module 310 to the pack BMS 200, receive a request from the pack BMS 200, and perform an operation corresponding to the request.

The server 400 may provide a service that manages at least one battery pack (e.g., 100). To this end, the server 400 may transmit and receive data by communicating with the battery pack 100. For example, the server 400 may be a cloud server, but the scope of the present disclosure is not limited thereto. According to an embodiment, the server 400 may store battery data received from the battery pack 100 and maintain or change a control set value for the battery pack 100 based on a result of analyzing the stored battery data. Change of the control set value may be reflected into the BMS image of the battery pack 100, and when a new BMS image is generated and stored, the server 400 may transmit an update mode entry request for updating the BMS image to the battery pack 100. According to an embodiment, BMS image update may be performed by not only the result of analyzing the battery data, but also various reasons (e.g., errors in the design of the battery pack 100, changes in a battery operation policy, etc.).

A procedure for updating a BMS image through transmission of the update mode entry request will be described later with reference to FIGS. 3 and 4.

FIG. 3 is a flowchart showing a procedure for updating a BMS image according to an embodiment of the present disclosure. FIG. 4 is a view schematically showing information used in the procedure for updating the BMS image of FIG. 3.

Referring to FIGS. 3 and 4, the procedure for updating the BMS image (i.e., firmware) according to an embodiment of the present disclosure may be initiated and progressed by the server 400.

The pack BMS 200 may receive the state data from each of the battery modules 310 to 340 and generate the battery data based on the state data. The pack BMS 200 may store the battery data in the main memory 230 and transmit the battery data to the server 400, in operation S110. The server 400 may match the received battery data to identification information (e.g., an identifier (ID)) of the pack BMS 200 and store them. An operation of transmitting and receiving battery data among the battery modules 310 to 340, the pack BMS 200, and the server 400 may be performed according to a predetermined algorithm (e.g., a certain period or a certain condition).

The server 120 may determine whether a new BMS image for the pack BMS 200 is registered (i.e., updated), in operation S120.

When the new BMS image for the pack BMS 200 is not registered (No in operation S120), operation S110 may be performed again.

When the new BMS image for the pack BMS 200 is registered (Yes in operation S120), the server 400 may identify version information of the BMS image currently stored in the pack BMS 200 in operation S130, and determine whether BMS image update is required by comparing the version information of the BMS image currently stored in the battery pack 100 with version information of the new BMS image in operation S140. Herein, the version information may be information of a version of the BMS image, and the server 400 may match the version information of the BMS image to the identification (e.g., the ID) of the pack BMS 200 and store them when BMS image update for the pack BMS 200 is completed.

When the version information of the BMS image stored in the pack BMS 200 is the same as the version information of the new BMS image and thus BMS image update is not required (No in operation S140), operation S110 may be performed again.

When the version information of the BMS image stored in the pack BMS 200 is different from the version information of the new BMS image and thus BMS image update is required (Yes in operation S140), the server 400 may transmit an update mode entry request to the pack BMS 200 in operation S150. The update mode entry request may be a message requesting the pack BMS 200 to progress BMS image update after a device having mounted thereon the pack BMS 200 stops operating (e.g., the electric scooter turns off).

The pack BMS 200 having received the update mode entry request may transmit a response to the update mode entry request to the server 400.

The server 400 may extract battery data corresponding a verification rule among battery data corresponding to the pack BMS 200, stored in the server 400, and encrypt the extracted battery data by using a secret key, in operation S160. Herein, the verification rule may mean a rule for determining an encryption target among battery data sequentially received corresponding to the pack BMS 200 (i.e., a rule for selecting which battery data to encrypt).

According to an embodiment, the verification rule may be previously shared between the pack BMS 200 and the server 400, and may, for example, extract battery data transmitted and received last (or most recently) among the battery data corresponding to the pack BMS 200.

According to an embodiment, the verification rule may be shared by a response to the update mode entry request. That is, the response to the update mode entry request may include information about the verification rule. For example, the pack BMS 200 may include a number (e.g., 60) determined at random among a plurality of numbers (e.g., 1 to 100) as information about the verification rule in the response to the update mode entry request and transmit the response to the server 400. The server 400 may receive the response to the update mode entry request and extract and encrypt battery data transmitted and received 60th from the last among the battery data corresponding to the pack BMS 200 according to the information about the verification rule. In this case, the pack BMS 200 may compare the decrypted battery data with battery data transmitted and received 60th from the last among previously stored battery data in a subsequent comparison operation.

According to another embodiment, the verification rule may be shared by the update mode entry request. That is, the update mode entry request may include the information about the verification rule. For example, the server 400 may include a number (e.g., 60) determined at random among a plurality of numbers (e.g., 1 to 100) as information about the verification rule in the update mode entry request and transmit the update mode entry request to the pack BMS 200. The server 400 may extract and encrypt battery data transmitted and received 60th from the last among the battery data corresponding to the pack BMS 200 according to the verification rule. The pack BMS 200 may receive the update mode entry request and extract the battery data transmitted and received 60th from the last among the previously stored battery data according to the information about the verification rule, and compare the decrypted battery data with the battery data transmitted and received 60th from the last among the previously stored battery data in a subsequent comparison operation.

According to another embodiment, the verification rule may be included in a secret key shared previously between the server 400 and the battery pack 100. That is, the secret key may include the information about the verification rule. The information about the verification rule may include time information and data information.

Herein, the time information may include a time offset indicating an amount of time preceding the current time. In addition, the data information may include a data identification item indicating specific data among data included in the battery data (e.g., voltage, current, resistance, temperature, an SoC, a SoH, etc., of a battery cell).

The server 400 may extract and encrypt data corresponding to a data identification item (e.g., at least one of voltage, current, and temperature of a battery cell) from battery data transmitted and received at a time preceding by a time offset from the current time among the battery data corresponding to the pack BMS 200 according to the information about the verification rule, included in the secret key. The pack BMS 200 may extract data corresponding to a data identification item (e.g., any one of voltage, current, and temperature of a battery cell) from battery data transmitted and received at a time preceding by a time offset from the current time among the previously stored battery data according to the information about the verification rule, included in the secret key shared previously, and compare the decrypted battery data with the battery data extracted from the previously stored battery data according to the verification rule in a subsequent comparison operation. Herein, the battery data for comparison may correspond to a part of the battery data.

The server 400 may extract the battery data corresponding the verification rule among the battery data corresponding to the pack BMS 200, stored in the server 400, and encrypt the extracted battery data by using the secret key, in operation S160.

The server 400 may transmit the encrypted battery data to the pack BMS 200 in operation S170, and the pack BMS 200 may decrypt the encrypted battery data by using the secret key stored in the security memory 240, in operation S180. For example, an encryption/decryption scheme using a secret key may be an advanced encryption standard (AES) encryption algorithm, but the scope of the present disclosure is not limited thereto.

The pack BMS 200 may compare the battery data decrypted after received from the server 400 with the battery data extracted from the main memory 230 according to the verification rule to determine whether they are the same as each other, in operation S190. For example, when the verification rule is to extract the last (or most recently) transmitted and received battery data from among the battery data corresponding to the pack BMS 200, the pack BMS 200 may extract the last transmitted battery data from among the battery data stored in the main memory 230 for comparison with the battery data decrypted after received from the server 400.

When the battery data decrypted after received from the server 400 is different from the battery data extracted from the main memory 230 according to the verification rule (No in operation S190), operation S110 may be performed again.

When the battery data decrypted after received from the server 400 is the same as the battery data extracted from the main memory 230 according to the verification rule (No in operation S190), a subsequent BMS image update operation may be performed.

This is intended to prevent a serious accident such as ignition/explosion, etc., from occurring due to a malicious attacker hacking a communication line between the pack BMS 200 and the server 400 to imitate the server 400 and the pack BMS 200 being updated with an incorrect BMS image. In the present disclosure, the pack BMS 200 may verify in advance whether it is the legitimate server 400 having all of a valid secrete key, a valid verification rule, and valid battery data, and allows only the verified server 400 to perform a BMS image update operation, thereby preventing the BMS image update operation due to hacking through the communication line between the pack BMS 200 and the server 400.

After operation S190, the pack BMS 200 may determine based on a signal received from a device having mounted thereon the battery pack 100 whether the device is turned off, in operation S200.

The pack BMS 200 may wait for reception of a signal indicating turning off (No in operation S200), and when receiving the signal indicating turning off (Yes in operation S200), the pack BMS 200 may enter an update mode in operation S210 and perform BMS image update in operation S220. According to an embodiment, the pack BMS 200 may receive a new BMS image for the pack BMS 200 and store the new BMS image in place of the BMS image previously stored in the main memory 230, thereby performing BMS image update.

The BMS image may include a BMS image stored in the pack BMS 200 (i.e., a pack BMS image) and/or a BMS image stored in each of the module BMs 315 to 345 (i.e., a module BMS image).

When the new BMS image includes only a pack BMS image (i.e., when module BMS update is not required (No in operation S230)), a BMS image update procedure may be terminated.

When the module BMS image is included in the new BMS image (i.e., module BMS update is required (Yes in operation S230)), the pack BMS 200 may transmit the module BMS image to the corresponding module BMS to control the module BMS to perform module BMS image update in operation S240.

As shown in FIG. 4, the pack BMS 100 and the server 400 may store secret keys, battery data, and verification rules, shared and stored through different timings and different paths, and the pack BMS 200 may verify the server 400 as the valid server 400 when the server 400 has all of the secret keys, the battery data, and the verification rule stored in the pack BMS 200, such that the BMS image of the server 400 may be updated in the pack BMS 200.

FIG. 5 is a flowchart showing a procedure for updating a BMS image according to another embodiment of the present disclosure. FIG. 6 is a view schematically showing information used in the procedure for updating the BMS image of FIG. 5.

Referring to FIGS. 5 and 6, the procedure for updating the BMS image (i.e., firmware) according to another embodiment of the present disclosure may be initiated and progressed by an update device 500. The update device 500 may perform update of a BMS image for the pack BMS 200.

As described with reference to FIG. 2, the pack BMS 200 may include the input/output terminal 250 for electrical connection and/or communication with the update device 500, and the input/output terminal 250 according to an embodiment may be mounted inside the battery pack 100 in a state of not exposed to outside, and may be exposed to outside after the battery pack 100 is disassembled in operation S310.

As shown in FIG. 6, the input/output terminal 250 exposed to outside and the update device 500 may be connected through a cable 510 in operation S320. Herein, the cable 510 may be a flat cable, but the scope of the present disclosure is not limited thereto.

The update device 500 may generate a clock signal based on a previously stored clock pattern and transmit the clock signal to the pack BMS 200 through the cable 510, in operation S330. Herein, the clock pattern may be a pattern for determining a waveform of the clock signal and may be determined by changing an amplitude, a period, a frequency, a duty cycle of the clock signal, or a combination thereof. For example, when the input/output terminal 250 is the JTAG connector, the clock signal may be received through a clock pin of the JTAG connector.

The pack BMS 200 may analyze the clock signal received through the cable 510 to extract a clock pattern of the received clock signal. According to an embodiment, the pack BMS 200 may detect amplitude, period, frequency, duty cycle of the received clock signal or a combination thereof and determine the clock pattern of the received clock signal based on a detected result. To this end, the pack BMS 200 may further include a timer, a voltage meter, an analog-to-digital converter, etc.

The pack BMS 200 may compare a previously shared and stored clock pattern with the clock pattern of the received clock signal to determine whether they are the same as each other, in operation S340. Herein, when they are the same, this may mean a concept including a case where they are similar within a specific range considering an influence of other noise (e.g., noise corresponding to a state of the cable 510) as well as a case where they are completely physically the same.

When the previously stored clock pattern is not the same as the clock pattern of the received clock signal (No in operation S340), the BMS image update procedure may be terminated.

When the previously stored clock pattern is the same as the clock pattern of the received clock signal (Yes in operation S340), the pack BMS 200 may enter a system management mode in operation S350. Herein, the system management mode may mean a mode for performing an operation of verifying (e.g., debugging) whether instructions required for an operation of the battery pack 100 are normal, as well as the BMS image update operation.

The pack BMS 200 may enter the system management mode and perform the BMS image update operation and debugging under control of the update device 500, in operation S360. The BMS image update operation is substantially the same as an operation of updating BMS images for the pack BMS 200 and the module BMSs 315 to 345, described with reference to FIG. 3, and thus will not be described redundantly.

According to the present disclosure, it is possible to prevent a serious accident such as ignition/explosion, etc., from occurring due to a malicious attacker hacking the input/output terminal 250 of the pack BMS 200 to imitate the update device 500 and the pack BMS 200 being updated with an incorrect BMS image. The pack BMS 200 may verify in advance whether the update device 500 is a valid update device 500 capable of generating and transmitting a clock signal according to a valid clock pattern, and enable the BMS image update operation to be performed by the verified update device 500, thereby preventing the BMS image update operation through the input/output terminal 250 of the pack BMS 200 due to hacking.

As can be seen in FIG. 6, the pack BMS 200 and the update device 500 may respectively store a previously shared and stored clock pattern, and only when the update device 500 generates and transmits a clock signal based on the same clock pattern as a clock pattern stored in the pack BMS 200, the pack BMS 200 verifies the update device 500 as a valid update device 500, such that a BMS image of the update device 500 may be updated in the pack BMS 200.

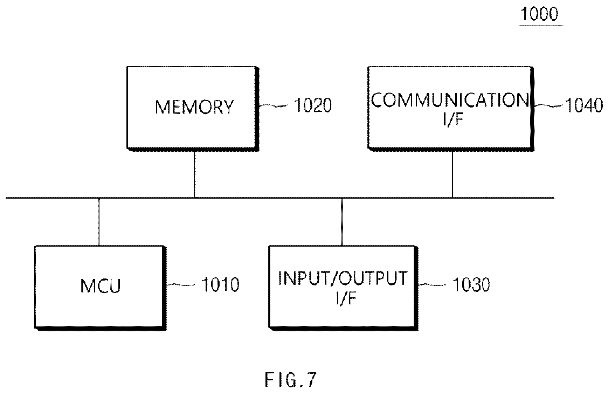

FIG. 7 is a block diagram showing a hardware configuration of a computing system for performing an operating method of a battery management system, according to an embodiment disclosed herein.

Referring to FIG. 7, a computing system 1000 according to an embodiment disclosed herein may include a MCU 1010, a memory 1020, an input/output I/F 1030, and a communication I/F 1040.

According to an embodiment, the computing system 1000 may be a system for performing the above-described operations of the pack BMS 200, the module BMSs 315 to 345, or the server 400 (hereinafter, referred to as a 'corresponding device').

The MCU 1020 may be a processor that executes various programs stored in the memory 1020.

For example, the MCU 1020 may be a processor for processing data and/or a signal required for the pack BMS 200 to manage and control the battery pack 100.

The memory 1020 may store various programs and/or data required for managing and controlling the corresponding device. The memory 1020 may be provided in plural, depending on a need.

The memory 1020 may be volatile memory or non-volatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., to the MCU 1010.

The communication I/F 1040, which is a component capable of transmitting and receiving various data to and from external components including a server, may be various devices capable of supporting wired or wireless communication.

As such, a computer program according to an embodiment disclosed herein may be recorded in the memory 1020 and executed and processed by the MCU 1010, thus being implemented as a module that performs functions shown in FIGS. 1 to 6.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

## Claims

1. A method of updating firmware of a battery pack, the method comprising:
transmitting battery data indicating a state of a battery cell included in the battery pack to a server;
receiving an update mode entry request for firmware update from the server;
receiving encrypted battery data, which is data obtained by encrypting the battery data, from the server;
decrypting the encrypted battery data;
comparing the decrypted battery data with the battery data stored in the battery pack; and
updating firmware stored in the battery pack by using firmware received from the server, when the decrypted battery data being the same as the battery data stored in the battery pack.

2. The method of claim 1, wherein the encrypting of the battery data is performed using a secret key stored in the server, and
the decrypting of the encrypted battery data is performed using a secret key stored in the battery pack.

3. The method of claim 1, wherein the battery data is most recent battery data transmitted most recently from the battery pack.

4. The method of claim 1, further comprising transmitting a response to the update mode entry request to the server after receiving the update mode entry request.

5. The method of claim 4, wherein the response to the update mode entry request comprises information about a verification rule which is a rule for determining a target for the encryption.

6. The method of claim 5, wherein, in the comparing, each of the decrypted battery data and the battery data stored in the battery pack is battery data determined according to the verification rule.

7. The method of claim 1, wherein the updating of the firmware stored in the battery pack is performed after a device on which the battery pack is mounted is turned off.

8. A method of updating firmware of a battery pack, by a server, the method comprising:
receiving battery data indicating a state of a battery cell included in the battery pack from the battery pack;
when firmware update for the battery pack being required, transmitting an update mode entry request for the firmware update to the battery pack;
encrypting the battery data and transmitting the encrypted battery data to the battery pack; and
transmitting firmware corresponding to the battery pack to the battery pack to update firmware stored in the battery pack.

9. The method of claim 8, wherein the battery data is most recent battery data received most recently by the server.

10. The method of claim 8, further comprising receiving a response to the update mode entry request from the battery pack after transmitting the update mode entry request.

11. The method of claim 10, wherein the response to the update mode entry request comprises information about a verification rule which is a rule for determining a target for the encryption.

12. The method of claim 11, wherein the battery data to be encrypted is determined according to the verification rule.

13. A battery pack comprising:
at least one battery module; and
a pack battery management system (BMS) configured to control the at least one battery module,
wherein the pack BMS comprises:
a communication unit configured to transmit battery data indicating a state of a battery cell included in the battery pack to a server and receive an update mode entry request for firmware update and encrypted battery data, which is data obtained by encrypting the battery data, from the server; and
a controller configured to compare decrypted battery data, which is generated by decrypting the encrypted battery data, with battery data stored in the pack BMS, and update firmware stored in the pack BMS by using firmware received from the server, when the decrypted battery data being the same as the battery data stored in the pack BMS.

14. The battery pack of claim 13, wherein the encrypting of the battery data is performed using a secret key stored in the server, and
the decrypting of the encrypted battery data is performed using a secret key stored in a security memory of the pack BMS.

15. The battery pack of claim 13, wherein the battery data is most recent battery data transmitted most recently by the communication unit.
